# EUROPÄISCHE PATENTANMELDUNG

(11) **EP 4 390 510 A1**
(43) Veröffentlichungstag der Anmeldung: **26.06.2024**
(21) Anmeldenummer: 23218190.9
(22) Anmeldetag: 19.12.2023
(51) Int. Cl.: G02B 27/01, G02B 27/00, G02B 26/10, G02B 27/42, G02B 27/09, G02B 27/10

(54) **VORRICHTUNG ZUR ERZEUGUNG UND DARSTELLUNG EINES BILDES AUF EINEM BEOBACHTUNGSFELD UNTER VERWENDUNG EINES MULTIFUNKTIONALEN DIFFRAKTIVEN ELEMENTS**

(30) Priorität: 21.12.2022 DE 102022134418
(71) Anmelder: OQmented GmbH, 25524 Itzehoe (DE)
(72) Erfinder: FRANZ, Stefan, 07751 Jena (DE)
(74) Vertreter: Gleim Petri Patent- und Rechtsanwaltspartnerschaft mbB

(57) **Zusammenfassung**

Die Erfindung betrifft eine Vorrichtung zur Erzeugung und Darstellung eines Bildes in einem zur Einblendung von Informationen und Bildern vorgesehenen Beobachtungsfeld (1), umfassend mindestens eine Lichtquelle (2) zum Aussenden mindestens eines divergenten Lichtbündels (3), einen Mikroscanner (4) zur variablen Ablenkung des mindestens einen Lichtbündels (3) in Richtung des Beobachtungsfelds (1), wobei der Mikroscanner (4) mindestens eine Drehachse für eine rotatorische Schwingbewegung zur Ablenkung des Lichtbündels (3) aufweist, einen Wellenleiter (7), der in einem zwischen der Lichtquelle (2) und dem Mikroscanner (4) vorhandenen Strahlengang des Lichtbündels (3) angeordnet ist, ein diffraktives Element (5), das auf oder in dem Wellenleiter (7) derart angebracht ist, dass das von der mindestens einen Lichtquelle (2) ausgesandte Lichtbündel (3) durch das diffraktive Element (5) transmittiert wird, bevor es zu dem Mikroscanner (4) gelangt, und ein von dem Mikroscanner (4) abgelenktes Lichtbündel (3) durch das diffraktive Element (5) in den Wellenleiter (7) eingekoppelt wird.

## Beschreibung

Die Erfindung betrifft eine Projektionsvorrichtung zur Erzeugung und Darstellung eines Bildes in einem zur Projektion erweiterter Realität vorgesehenen Beobachtungsfeld, welches insbesondere ein Brillenglas oder eine Netzhaut eines Benutzers einer Augmented-Reality-Brille sein kann.

Erweiterte Realität (engl.: Augmented Reality, kurz AR) bezeichnet die computergestützte Erweiterung der Realitätswahrnehmung, die mindestens eine der menschlichen Sinnesmodalitäten anspricht. Häufig wird unter AR jedoch nur die visuelle Darstellung von Informationen verstanden, nämlich die Ergänzung von Bildern oder Videos mit computergenerierten Zusatzinformationen und/oder virtuellen Objekten mittels Einblendung bzw. Überlagerung. Insbesondere die visuelle Darstellung bzw. Projektion von Bildern, Benutzeroberflächen oder Informationen, wie Wegbeschreibungen, Wetterinformationen oder Nachrichten, stellt eine häufige Anwendung von AR dar und findet zunehmend Anwendung in sogenannten AR-Brillen, die Bilder, Benutzeroberflächen oder Informationen direkt auf den Brillengläsern oder der Netzhaut eines Benutzers darstellen können.

Zur Projektion von Bildern oder Textinformationen kann ein Mikroscanner (auch mikro-elektro-mechanisches System, kurz: MEMS) verwendet werden. Auf den MEMS-Scanner wird ein Lichtbündel, der von einer beispielsweise in einem Bügel einer Brille angeordneten Lichtquelle erzeugt und anschließend geformt wird, abgelenkt. Durch den MEMS-Scanner kann das Lichtbündel dann gescannt werden, wodurch auf einem Beobachtungsfeld ein Bild erzeugt wird. Ein solches bildgebendes System mit MEMS-Scanner benötigt vergleichsweise wenig optische Elemente, wodurch kleine und kostengünstige Projektoren realisiert werden können. Für AR-Anwendungen muss ein Projektor eine sehr gute optische Auflösung erzielen und sehr wenig Strom verbrauchen. Aufgrund mangelnder Alternativen werden daher häufig Kantenemitter als Lichtquelle verwendet. Diese emittieren jedoch ein stark divergentes, elliptisch geformtes Lichtbündel, das kollimiert werden muss.

Ein MEMS-Scanner ist beispielsweise in der DE 10 2021 116 151 B3 beschrieben. Der dort offenbarte MEMS-Scanner kann um zwei resonante Schwingungsachsen simultan rotatorische Oszillationen ausführen, um durch Ablenken eines während der Oszillationen auf ein Ablenkelement einfallenden Lichtstrahls eine nichtlineare Lissajous-Projektion in ein Beobachtungsfeld zu bewirken.

Durch die Oszillationen wird ein Sichtfeld (engl.: Field of View, kurz: FOV) mit hohen Frequenzen in einem Scan-Muster, das einer Lissajous-Figur gleicht, gescannt. Im Gegensatz zu konventionellen Rasterscanverfahren, die das FOV periodisch von oben nach unten mit maximaler Auflösung scannen, können so hunderte Teilbilder gleichzeitig verarbeitet und eine flüssigere Bewegungsdarstellung ermöglicht werden. Außerdem werden Artefakte bei der dreidimensionalen Wahrnehmung von sich schnell bewegenden Objekten stark reduziert.

Zur Strahlformung sowie zur Kollimation ist aus der DE 10 2017 211 932 A1 eine Datenbrille und eine Projektionsvorrichtung für eine Datenbrille sowie ein Verfahren zum Betreiben der Projektionsvorrichtung bekannt. Die offenbarte Projektionsvorrichtung weist eine Lichtquelle zum Aussenden mindestens eines Lichtstrahls, ein Umlenkelement zum Projizieren eines Bildes auf eine Netzhaut eines Nutzers, ein Reflexionselement zum Reflektieren des Lichtstrahls auf das Umlenkelement sowie ein adaptives optisches Element zur anpassenden Veränderung mindestens eines Strahlparameters auf. Die Projektionsvorrichtung kann, falls notwendig, auch Kollimationselemente des Lichtstrahls aufweisen.

Eine weitere in der DE 10 2019 219 520 A1 offenbarte Bilderzeugungs- und Bilddarstellungsvorrichtung umfasst eine Lichtquelle, ein Umlenkelement und eine zwischen der Lichtquelle und dem Umlenkelement angeordnete Linsenanordnung, wobei die Linsenanordnung zwei Zylinderlinsen enthält, mit denen unterschiedliche Strahlprofile in zwei Achsen erzeugt werden können. Durch die Zylinderlinsen kann ein von der Lichtquelle ausgesandter Lichtstrahl kollimiert und geformt werden.

Aus der DE 10 2018 201 525 A1 ist eine weitere Projektionsvorrichtung für eine Datenbrille bekannt, die eine Lichtquelle zum Aussenden eines Lichtstrahls, mindestens ein Umlenkelement zum Projizieren eines Bildes auf einer Netzhaut eines Nutzers sowie ein Reflexionselement zum Reflektieren des Lichtstrahls auf ein erstes Umlenkelement aufweist. Darüber hinaus weist die Projektionsvorrichtung einen Lichtleiter zwischen der Lichtquelle und dem Reflexionselement auf. Der Lichtleiter dient dazu, das von der Lichtquelle ausgesandte Licht zu einem Umlenkelement zu leiten. Darüber hinaus wird durch den Lichtleiter eine Bildqualität verbessert, da Moden, die nicht einer Grundmode des Lichtleiters entsprechen, beim Einkoppeln des Lichtstrahls in den Lichtleiter aus dem Lichtstrahl gefiltert werden und es gelangt weniger Störlicht in einen Strahlengang des Lichtstrahls.

Bei den beschriebenen Projektionsvorrichtungen ist stets ein zusätzliches optisches Element zur Kollimation des von einer Lichtquelle emittierten Lichtbündels vorgesehen. Da der Bauraum bei einer AR-Brille beschränkt ist und Designaspekte bei AR-Brillen eine große Rolle spielen, ist es nachteilig, viele optische Elemente mit relativ großen Weglängen der Lichtbündel, wie beispielsweise Teleskopanordnungen mit mehreren Linsen, in eine AR-Brille zu integrieren. Zudem beeinflusst die Anzahl der Bauteile bei der Montage der Projektionsvorrichtung auch nachteilig den Justageaufwand, der mit steigender Anzahl der Bauteile zunimmt.

Das Scannen eines von einer Laserdiode emittierten Lichtbündels über ein Beobachtungsfeld wird auch als Laser Beam Scanning (kurz: LBS) bezeichnet.

Ein Display für eine augennahe Anzeige von Abbildungen ist durch die WO 2021/122948 offenbart. Das Display umfasst eine Lichtquelle zum emittieren von Licht in Richtung eines Wellenleiters, den Wellenleiter sowie ein erstes optisches Element, das auf dem Wellenleiter vorgesehen und so konfiguriert ist, dass es Licht empfängt und in den Wellenleiter einkoppelt. Zum Anzeigen der Abbildungen kann LBS eingesetzt werden.

Ein grundlegendes Problem bei LBS-Projektionsvorrichtungen, bei denen Lichtbündel in einen Wellenleiter eingekoppelt werden sollen, ist der begrenzte vorhandene Bauraum, in dem die zur Strahlformung benötigten optischen Elemente und die zur Einkopplung der Lichtbündel in den Wellenleiter dienenden optischen Elemente in einem Strahlengang der Lichtbündel angeordnet werden müssen.

Die Aufgabe der Erfindung ist es daher, eine neue Möglichkeit zur Bilderzeugung und Bilddarstellung auf einem Beobachtungsfeld zur AR-Informationsprojektion zu finden, die bei hoher optischer Auflösung und geringem Stromverbrauch wenige optische Elemente und wenig Bauraum beansprucht.

Die Aufgabe wird durch eine Vorrichtung zur Erzeugung und Darstellung eines Bildes in einem zur Einblendung von Informationen und Bildern vorgesehenen Beobachtungsfeld, umfassend mindestens eine Lichtquelle zum Aussenden mindestens eines divergenten Lichtbündels, einen Mikroscanner zur variablen Ablenkung des mindestens einen Lichtbündels in Richtung des Beobachtungsfelds, wobei der Mikroscanner zur Ablenkung des mindestens einen Lichtbündels um mindestens eine Drehachse rotatorisch drehbar ausgebildet ist, einen Wellenleiter, der in einem zwischen der mindestens einen Lichtquelle und dem Mikroscanner vorhandenen Strahlengang des mindestens einen Lichtbündels angeordnet ist und ein diffraktives Element, das auf oder in dem Wellenleiter derart angebracht ist, dass das von der mindestens einen Lichtquelle ausgesandtes mindestens eine Lichtbündel durch das diffraktive Element transmittiert wird, bevor es zu dem Mikroscanner gelangt, und ein von dem Mikroscanner abgelenktes Lichtbündel durch das diffraktive Element in den Wellenleiter eingekoppelt wird, gelöst.

Die Erzeugung und Darstellung eines Bildes ist im Sinne der Erfindung als die Erzeugung und Darstellung von einem Bild, mehreren Bildern oder einer Abfolge von Bildern zu verstehen. Mit einer erfindungsgemäßen Vorrichtung können auch Benutzeroberflächen oder Informationen, wie Wegbeschreibungen, Wetterinformationen oder Nachrichten auf dem Beobachtungsfeld dargestellt werden.

Das Beobachtungsfeld ist vorteilhaft mindestens eine optisch wirksame Fläche, beispielsweise mindestens ein Strahlteiler oder ein holographisches optisches Element (engl.: Holographic Optical Element, kurz: HOE), das in einem Brillenglas einer AR-Brille oder auf einer Frontscheibe eines Kraftfahrzeugs aufgebracht ist. Alternativ ist das Beobachtungsfeld mindestens eine Netzhaut eines Nutzers.

Das diffraktive Element ist ein optisches Element, auf dem Mikrostrukturen aufgebracht sind. An den diffraktiven Elementen kann sowohl eine Phase des mindestens einen Lichtbündels als auch ein Intensitätsmuster des Lichtbündels moduliert werden. Die Modulation erfolgt durch Beugung des mindestens einen Lichtbündels an dem diffraktiven Element. Dadurch kann das mindestens eine Lichtbündel kollimiert, abgelenkt, geformt und/oder geteilt werden sowie Astigmatismen des mindestens einen Lichtbündels beeinflusst, bevorzugt entfernt, werden.

Der mindestens eine Wellenleiter ist im Wesentlichen plattenförmig und besteht aus einem Material, durch das ein von der Lichtquelle emittiertes Lichtbündel propagieren kann. Das mindestens eine Lichtbündel propagiert bevorzugt durch Totalreflektion an den Außenflächen des Wellenleiters. Dazu muss das mindestens eine Lichtbündel unter einem Winkel, der größer als ein Winkel der Totalreflexion ist, in den Wellenleiter eingekoppelt werden. Der Winkel der Totalreflexion hängt von dem Material ab, aus dem der Wellenleiter besteht. Der mindestens eine Wellenleiter kann aus mehreren Schichten oder aus nur einer Schicht bestehen. Bevorzugt ist der Wellenleiter eine Platte aus Glas. Besonders bevorzugt ist der Wellenleiter ein Brillenglas einer Augmented-Reality-Brille oder die Frontscheibe eines Kraftfahrzeugs.

Durch das Anbringen des diffraktiven Elements auf oder in dem mindestens einen Wellenleiter wird der für die Vorrichtung zur Erzeugung und Darstellung eines Bildes auf einem zur Einblendung von Informationen und Bildern vorgesehenen Beobachtungsfeld benötigte Bauraum beträchtlich reduziert, da keine zusätzlichen optischen Elemente für die Kollimation, Ablenkung, Formung, Beeinflussung von Astigmatismen und/oder Teilung benötigt werden.

Auf dem Wellenleiter, insbesondere auf Außenseiten des Wellenleiters, an denen ein diffraktives Element aufgebracht ist, kann zudem ein Deckglas aufgebracht sein, das die Außenseite des Wellenleiters und/oder das diffraktive Element vor äußeren Einflüssen schützt. Besonders bevorzugt ist auf beiden Außenseiten des Wellenleiters ein Deckglas aufgebracht.

Vorteilhaft ist das diffraktive Element zur Strahlteilung des von der mindestens einen Lichtquelle ausgesandten Lichtbündels ausgebildet. Besonders vorteilhaft ist diffraktive Element dazu ausgebildet nur Lichtbündel, die von dem Mikroscanner kommend auf das diffraktive Element fallen, zu teilen. Das Teilen des mindestens einen Lichtbündels ist insbesondere für die Projektion des Lichtbündels auf das Beobachtungsfeld vorteilhaft, da mit einem geteilten Strahlengang des mindestens einen Lichtbündels mehr Teilbilder gleichzeitig dargestellt werden können.

Vorteilhaft ist das diffraktive Element als optisches Gitter ausgebildet. Das diffraktive Element kann vorteilhaft als Amplitudengitter und/oder als Phasengitter, insbesondere als Blazegitter, ausgebildet sein. Des Weiteren können als diffraktives Element beispielsweise auch sogenannte Schrägkantengitter (engl. slanted edge grating), Zonenplatten und/oder holographische Gitter (HOE) eingesetzt sein. Optische Gitter können entweder auf eine Oberfläche des Wellenleiters aufgebracht oder direkt in das diffraktive Element eingebracht werden, wodurch Kosten und Aufwand bei der Produktion der Vorrichtung zur Erzeugung und Darstellung eines Bildes auf einem Beobachtungsfeld gering bleiben oder sinken, da keine zusätzlichen optischen Elemente im Strahlengang des mindestens einen Lichtbündels notwendig sind.

Das diffraktive Element kann zur Formung eines Strahlquerschnitts des mindestens einen Lichtbündels ausgelegt sein, um eine Elliptizität des mindestens einen Lichtbündels zu reduzieren. Die Elliptizität des mindestens einen Lichtbündels zu reduzieren ist insbesondere zum Erzielen einer sehr guten optischen Auflösung notwendig, da durch Lichtbündel mit einem elliptischen Strahlquerschnitt zusätzliche Abbildungsfehler erzeugt werden können.

Das diffraktive Element kann zur Beeinflussung von Astigmatismen des mindestens einen Lichtbündels ausgelegt sein. Insbesondere das Entfernen von Astigmatismen des mindestens einen Lichtbündels ist zum Verbessern der optischen Auflösung sinnvoll.

Das diffraktive Element soll vorteilhaft anamorphotisch wirken und das von der Lichtquelle emittierte divergente Strahlbündel kollimieren sowie entzerren, also Astigmatismen entfernen und eine Elliptizität des Strahlquerschnitts reduzieren.

Das diffraktive Element kann zudem zur Kollimation des von der mindestens einen Lichtquelle ausgesandten Lichtbündels ausgelegt sein. Im Strahlengang des mindestens einen Lichtbündels kann zwischen der Lichtquelle und dem diffraktiven Element mindestens ein zusätzliches optisches Element zur Kollimation und/oder zur Ablenkung des mindestens einen Lichtbündels angeordnet sein.

Das diffraktive Element kann zur Ablenkung des von der mindestens einen Lichtquelle ausgesandten Lichtbündels ausgelegt sein. Das diffraktive Element kann insbesondere dazu ausgelegt sein, das mindestens eine Lichtbündel in Richtung des Mikroscanners abzulenken und/oder das mindestens eine Lichtbündel so abzulenken, dass es senkrecht auf den Mikroscanner trifft.

Vorteilhaft ist die mindestens eine Lichtquelle als Kantenemitter, Oberflächenemitter oder als fasergekoppelte Laserlichtquelle ausgebildet. Oberflächenemitter und fasergekoppelte Lichtquellen haben den Vorteil, dass die von diesen Lichtquellen emittierten Lichtbündel in der Regel weniger divergent als die von Kantenemittern emittierten Lichtbündel sind. Dafür sind die Anschaffungskosten von Oberflächenemittern und fasergekoppelten Lichtquellen in der Regel höher als die von Kantenemittern. Besonders vorteilhaft kann eine Laserdiode oder ein fasergekoppelter Laser als Lichtquelle eingesetzt sein.

Die mindestens eine Lichtquelle kann dazu ausgebildet sein, mehrere Lichtbündel mit paarweise voneinander verschiedenen spektralen Zusammensetzungen zu emittieren.

Alternativ kann die mindestens eine Lichtquelle dazu ausgebildet sein, mehrere Lichtbündel mit derselben spektralen Zusammensetzung zu emittieren. Die Lichtquelle kann dazu mehrere Einzellichtquellen aufweisen, die in einem vorgegebenen Abstand zueinander liegen. Durch ein zusätzliches optisches Element kann vorzugsweise der Abstand der von den Einzellichtquellen emittierten Lichtbündel zueinander eingestellt werden. Das Verwenden einer Zeilenlichtquelle ist insbesondere dann sinnvoll, wenn der Mikroscanner um nur eine Drehachse drehbar ausgebildet ist, da dann durch ein gleichzeitiges Ansteuern von Zeilenlichtquelle und Mikroscanner ein Bild in zwei Dimensionen erzeugt werden kann.

Zwischen der mindestens einen Lichtquelle und dem Mikroscanner kann zudem ein zusätzliches optisches Element angeordnet sein, das dazu ausgelegt ist, die Lichtbündel mit paarweise voneinander verschiedenen spektralen Zusammensetzungen oder mit derselben spektralen Zusammensetzung, die unter paarweise verschiedenen Winkeln auf das zusätzliche optische Element fallen, zu einem einzigen Lichtbündel vereinigen. Alternativ kann das diffraktive Element dazu ausgelegt sein, die Lichtbündel mit paarweise voneinander verschiedenen spektralen Zusammensetzungen oder mit derselben spektralen Zusammensetzung zu einem einzigen Lichtbündel vereinigen.

Der Mikroscanner kann insbesondere als mikro-elektro-mechanisches System (MEMS) ausgebildet und dazu ausgelegt sein, eine nichtlineare Lissajous-Projektion in das Beobachtungsfeld zu bewirken. Der Mikroscanner ist so ausgebildet, um das Lichtbündel über das Beobachtungsfeld zu scannen, wodurch auf dem Beobachtungsfeld ein Bild erzeugt wird. Durch das Scannen des mindestens einen Lichtbündels entlang einer Lissajous-Figur können hunderte Teilbilder gleichzeitig verarbeitet werden und eine flüssigere Bewegungsdarstellung ermöglicht werden. Außerdem werden Artefakte bei der dreidimensionalen Wahrnehmung von sich schnell bewegenden Objekten durch den Nutzer stark reduziert.

Besonders vorteilhaft ist der Mikroscanner um genau zwei Drehachsen, die orthogonal zueinander sind, drehbar ausgebildet und oszilliert mit seiner Eigenfrequenz um die beiden Drehachsen. Der Mikroscanner kann auch nur um eine Drehachse drehbar ausgebildet sein und die Lichtquelle ist derart ausgebildet, um mehrere nebeneinander angeordnete Lichtbündel zeilenartig zu emittieren.

Die Aufgabe wird weiterhin durch eine Augmented-Reality-Brille, enthaltend eine Vorrichtung zur Erzeugung und Darstellung von Bildern gemäß einer der beschriebenen Ausführungen, gelöst.

Die Erfindung soll nachfolgend durch Ausführungsbeispiele anhand von Zeichnungen näher beschrieben werden. Hierzu zeigen:

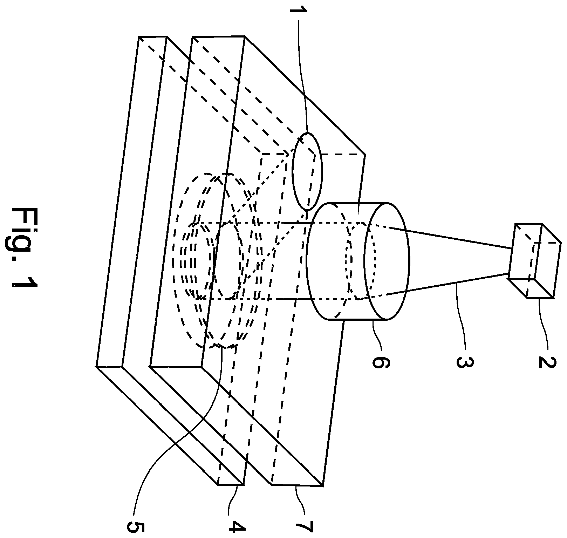

- Fig. 1: Eine Ansicht einer ersten Ausführung einer Vorrichtung zur Erzeugung und Darstellung eines Bildes auf einem Beobachtungsfeld mit einer Lichtquelle, einem zusätzlichen optischen Element, einem diffraktiven Element aufgebracht an einem Wellenleiter, und einem Mikroscanner sowie einen Strahlengang eines Lichtbündels,

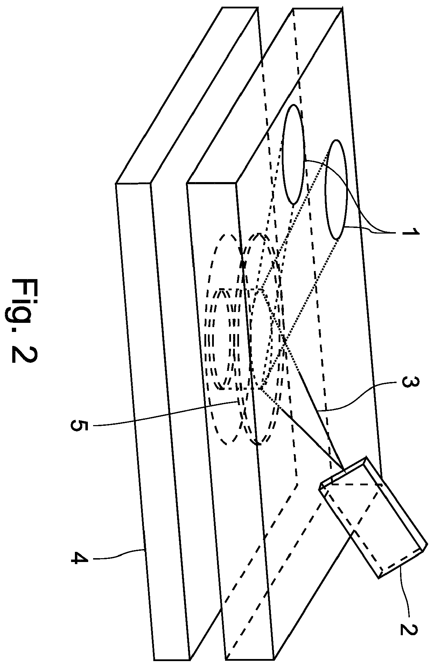

- Fig. 2: eine Ansicht einer zweiten Ausführung einer Vorrichtung zur Erzeugung und Darstellung eines Bildes auf dem Beobachtungsfeld mit der Lichtquelle, dem diffraktiven Element aufgebracht an dem Wellenleiter und dem Mikroscanner sowie den Strahlengang des Lichtbündels,

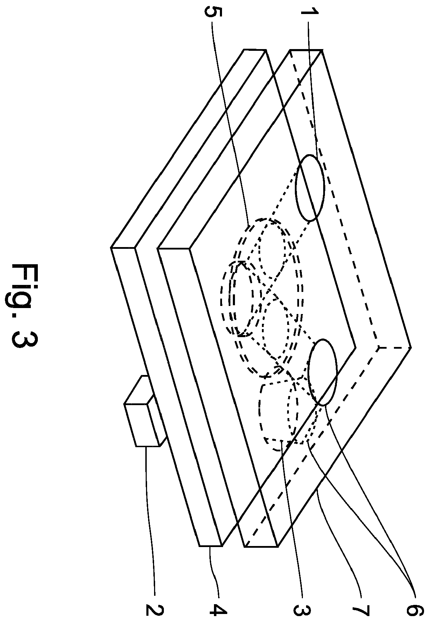

- Fig. 3: eine Ansicht einer dritten Ausführung einer Vorrichtung zur Erzeugung und Darstellung eines Bildes auf dem Beobachtungsfeld mit der Lichtquelle, zwei zusätzlichen optischen Elemente, dem diffraktiven Element aufgebracht an dem Wellenleiter und dem Mikroscanner sowie den Strahlengang des Lichtbündels,

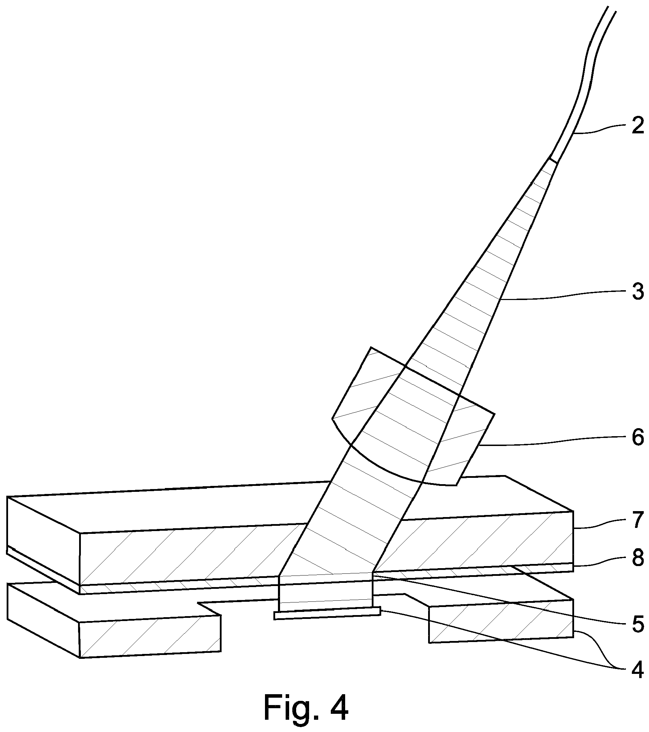

- Fig. 4: einen Schnitt durch eine Ansicht einer vierten Ausführung einer Vorrichtung zur Erzeugung und Darstellung eines Bildes auf dem Beobachtungsfeld mit der Lichtquelle, dem zusätzlichen optischen Element, dem diffraktiven Element aufgebracht an dem Wellenleiter, einem Deckglas und dem Mikroscanner sowie den Strahlengang des Lichtbündels,

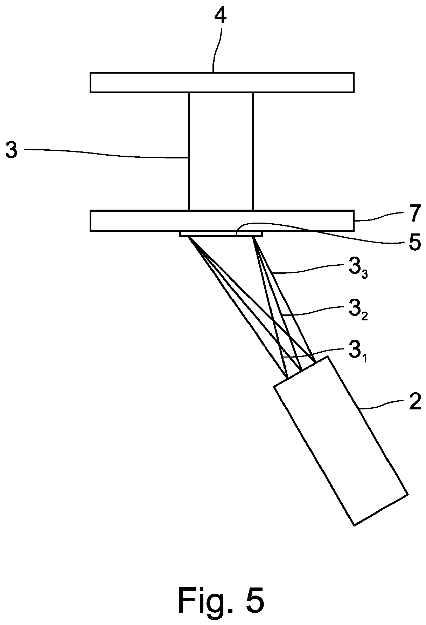

- Fig. 5: eine Ansicht einer fünften Ausführung einer Vorrichtung zur Erzeugung und Darstellung eines Bildes auf dem Beobachtungsfeld mit der Lichtquelle, dem diffraktiven Element aufgebracht auf dem Wellenleiter, und dem Mikroscanner sowie den Strahlengang mehrerer Lichtbündel.

In **Fig. 1** ist eine erste Ausführung einer Vorrichtung zur Erzeugung und Darstellung eines Bildes auf einem Beobachtungsfeld 1 mit einer Lichtquelle 2, die ein divergentes Lichtbündel 3 emittiert, einem Mikroscanner 4, einem diffraktiven Element 5 aufgebracht an einem Wellenleiter 7 und einem zusätzlichen optischen Element 6 sowie ein Strahlengang des Lichtbündels 3 dargestellt. Das diffraktive Element 5 ist in einen Wellenleiter 7 eingebracht und kreisförmig. Die Lichtquelle 2 ist in dem ersten Ausführungsbeispiel als Flächenemitter ausgeführt und emittiert ein Lichtbündel 3, dessen Strahlquerschnitt kreisförmig ist. Dadurch werden keine zusätzlichen diffraktiven Elemente 5 zur Formung eines Strahlquerschnitts des Lichtbündels 3 benötigt. Das zusätzliche optische Element 6 ist im Strahlengang des Lichtbündels 3 zwischen der Lichtquelle 2 und dem Wellenleiter 7 angeordnet und dazu ausgelegt, das divergente Lichtbündel 3 zu kollimieren. Das Lichtbündel 3 tritt senkrecht in den Wellenleiter 7 ein und trifft dort senkrecht auf das diffraktive Element 5, welches im Strahlengang des Lichtbündels 3 zwischen dem zusätzlichen optischen Element 6 und dem Mikroscanner 4 angeordnet ist. Das Lichtbündel 3 wird durch das diffraktive Element 5 transmittiert und trifft anschließend auf den Mikroscanner 4. Von dem Mikroscanner 4 wird das Lichtbündel 3 in Richtung des Beobachtungsfelds 1 abgelenkt.

Das Beobachtungsfeld 1 umfasst bei dem ersten Ausführungsbeispiel eine optisch wirksame Fläche, beispielsweise einen Strahlteiler oder ein holographisches optisches Element (engl.: Holographic Optical Element, kurz: HOE), die in ein Brillenglas einer AR-Brille eingebracht ist.

Eine zweite Ausführung der Vorrichtung zur Erzeugung und Darstellung eines Bildes auf dem Beobachtungsfeld 1 ist in **Fig. 2** dargestellt. Das von der Lichtquelle 2, die als Kantenemitter ausgebildet ist, emittierte Lichtbündel 3 fällt schräg auf den Wellenleiter 7 und tritt in diesen ein. Das Lichtbündel 3 ist elliptisch geformt und divergent. In dem Wellenleiter 7 trifft das Lichtbündel 3 auf das diffraktive Element 5. Durch das diffraktive Element 5 wird ein Strahlquerschnitt des Lichtbündels 3 geformt, wobei eine Elliptizität des Lichtbündels 3 verringert wird. Zudem wird das Lichtbündel 3 durch das diffraktive Element 5 in Richtung des Mikroscanners 4 abgelenkt und kollimiert.

Das Lichtbündel 3 wird durch das diffraktive Element 5 so abgelenkt und kollimiert, dass es senkrecht auf den Mikroscanner 4 fällt. Der Mikroscanner 4 lenkt das Lichtbündel 3 ab, wodurch das Lichtbündel 3 über das Beobachtungsfeld 1 gescannt und auf einem Beobachtungsfeld 1 ein Bild erzeugt wird,

Das Beobachtungsfeld 1 umfasst bei dem zweiten Ausführungsbeispiel zwei optisch wirksame Flächen, beispielsweise Strahlteiler oder HOEs, die in ein Brillenglas einer AR-Brille eingebracht sind.

In der in **Fig. 3** abgebildeten dritten Ausführung der Vorrichtung zur Erzeugung und Darstellung eines Bildes auf dem Beobachtungsfeld 1 ist die Lichtquelle 2 unterhalb des Mikroscanners 4 angeordnet und in den Mikroscanner 4 ist eine Aussparung eingelassen, durch die das Lichtbündel 3 durch den Mikroscanner 4 zu dem Wellenleiter 7 gelangen kann. An der Unterseite des Wellenleiters 7 ist ein zusätzliches optisches Element 6 angebracht, das dazu ausgelegt ist, das Lichtbündel 3 zu kollimieren und abzulenken. An der Oberseite des Wellenleiters 7 ist ein weiteres zusätzliches optisches Element 6 angebracht, das dazu ausgelegt ist das Lichtbündel 3 in Richtung des Mikroscanners 4 abzulenken. Durch das diffraktive Element 5 fällt das Lichtbündel 3 schräg bzw. unter einem Winkel auf den Mikroscanner 4 ein. Der Strahlquerschnitt des Lichtbündels 3 ist an den Stellen, durch denen das Lichtbündel 3 durch das diffraktive Element 5 tritt, durch gestrichelte Linien dargestellt. Durch den Mikroscanner 4 wird das Lichtbündel 3 in Richtung des Beobachtungsfelds 1 abgelenkt und trifft erneut auf das diffraktive Element 5.

**Fig. 4** zeigt eine vierte Ausführung einer Vorrichtung zur Erzeugung und Darstellung eines Bildes auf dem Beobachtungsfeld 1. Die Lichtquelle 2 ist als fasergekoppelte Lichtquelle ausgeführt und emittiert ein divergentes Lichtbündel 3. Nach dem Auskoppeln aus der fasergekoppelten Lichtquelle trifft das Lichtbündel 3 auf das zusätzliche optische Element 6. Das zusätzliche optische Element 6 ist im Strahlengang des Lichtbündels 3 zwischen der Lichtquelle 2 und dem Wellenleiter 7 angeordnet und dazu ausgelegt, das divergente Lichtbündel 3 zu kollimieren. Das zusätzliche optische Element 6 ist in dem vierten Ausführungsbeispiel als refraktives Element ausgeführt. Nach dem Eintritt des Lichtbündels 3 in den Wellenleiter 7 wird das Lichtbündel 3 durch das diffraktive Element 5 in Richtung des Mikroscanners 4 abgelenkt und kollimiert, bevor es auf den Mikroscanner 4 trifft.

Auf der dem Mikroscanner 4 zugewandten Außenseite des Wellenleiters 7 ist ein Deckglas 8 aufgebracht, um den Wellenleiter 7 und das diffraktive Element 5 vor äußeren Einflüssen zu schützen.

Eine fünfte Ausführung einer Vorrichtung zur Erzeugung und Darstellung eines Bildes auf dem Beobachtungsfeld 1, bei der die Lichtquelle 2 dazu ausgelegt ist, mehrere Lichtbündel 3₁, 3₂, 3₃ mit paarweise voneinander verschiedenen spektralen Zusammensetzungen oder mit derselben spektralen Zusammensetzung zu emittieren, ist in **Fig. 5** dargestellt. Die Lichtquelle 2 emittiert drei Lichtbündel 3₁, 3₂, 3₃ in Richtung des diffraktiven Elements 5. Die Lichtbündel 3₁, 3₂, 3a werden durch das diffraktive Element 5 in Richtung des Mikroscanners 4 abgelenkt, kollimiert und zu einem einzigen Lichtbündel 3 vereinigt.

In den Fig. 1-5 ist im Sinne einer leichter nachvollziehbaren Darstellung jeweils nur einer oder zwei von vielen möglichen Strahlengängen, die das Lichtbündel 3 nach der Ablenkung durch den Mikroscanner 4 nehmen kann, dargestellt.

### Bezugszeichenliste

- 1: Beobachtungsfeld
- 2: Lichtquelle
- 3: (vereinigtes) Lichtbündel
- 3₁: Lichtbündel
- 3₂: Lichtbündel
- 3₃: Lichtbündel
- 4: Mikroscanner
- 5: diffraktives Element
- 6: zusätzliches optisches Element
- 7: Wellenleiter
- 8: Deckglas

## Patentansprüche

1. Vorrichtung zur Erzeugung und Darstellung eines Bildes in einem zur Einblendung von Informationen und Bildern vorgesehenen Beobachtungsfeld (1), umfassend:
- mindestens eine Lichtquelle (2) zum Aussenden mindestens eines divergenten Lichtbündels (3),
- einen Mikroscanner (4) zur variablen Ablenkung des mindestens einen Lichtbündels (3) in Richtung des Beobachtungsfelds (1), wobei der Mikroscanner (4) mindestens eine Drehachse für eine rotatorische Schwingbewegung zur Ablenkung des mindestens einen Lichtbündels (3) aufweist, und
- einen Wellenleiter (7), der in einem zwischen der mindestens einen Lichtquelle (2) und dem Mikroscanner (4) vorhandenen Strahlengang des mindestens einen Lichtbündels (3) angeordnet ist,
- ein diffraktives Element (5), das auf oder in dem Wellenleiter (7) derart angebracht ist, dass
• das von der mindestens einen Lichtquelle ausgesandte Lichtbündel (3) durch das diffraktive Element (5) transmittiert wird, bevor es zu dem Mikroscanner (4) gelangt, und
• ein von dem Mikroscanner (4) abgelenktes Lichtbündel (3) durch das diffraktive Element (5) in den Wellenleiter (7) eingekoppelt wird.

2. Vorrichtung nach Anspruch 1, wobei das diffraktive Element (5) zur Strahlteilung des von der mindestens einen Lichtquelle (2) ausgesandten Lichtbündels (3) ausgebildet ist.

3. Vorrichtung nach Anspruch 1 oder 2, wobei das diffraktive Element (5) als Gitter ausgebildet ist.

4. Vorrichtung nach einem der Ansprüche 1 bis 3, wobei das diffraktive Element (5) zur Formung eines Strahlquerschnitts des mindestens einen Lichtbündels (3) ausgelegt ist, um eine Elliptizität des mindestens einen Lichtbündels (3) zu reduzieren.

5. Vorrichtung nach einem der Ansprüche 1 bis 3, wobei das diffraktive Element (5) zur Beeinflussung von Astigmatismen des mindestens einen Lichtbündels (3) ausgelegt ist.

6. Vorrichtung nach einem der Ansprüche 1 bis 4, wobei das diffraktive Element (5) zur Kollimation des von der mindestens einen Lichtquelle (2) ausgesandten Lichtbündels (3) ausgelegt ist.

7. Vorrichtung nach einem der Ansprüche 1 bis 6, wobei das diffraktive Element (5) zur Ablenkung des von der mindestens einen Lichtquelle (2) ausgesandten Lichtbündels (3) ausgelegt ist.

8. Vorrichtung nach einem der Ansprüche 1 bis 7, wobei die mindestens eine Lichtquelle (2) als Kantenemitter, Oberflächenemitter oder als fasergekoppelte Lichtquelle ausgebildet ist.

9. Vorrichtung nach einem der Ansprüche 1 bis 8, wobei die mindestens eine Lichtquelle (2) dazu ausgebildet ist, mehrere Lichtbündel (3ᵢ) mit paarweise voneinander verschiedenen spektralen Zusammensetzungen zu emittieren.

10. Vorrichtung nach einem der Ansprüche 1 bis 9, wobei die mindestens eine Lichtquelle (2) dazu ausgebildet ist, mehrere Lichtbündel (3ᵢ) mit derselben spektralen Zusammensetzung zu emittieren.

11. Vorrichtung nach einem der Ansprüche 1 bis 10, wobei der Mikroscanner (4) als mikro-elektro-mechanisches System ausgebildet und dazu ausgelegt ist, eine nichtlineare Lissajous-Projektion in das Beobachtungsfeld (1) zu bewirken.

12. Vorrichtung nach einem der Ansprüche 1 bis 11, wobei der Wellenleiter (7) ein Brillenglas einer Augmented-Reality-Brille ist.

13. Augmented-Reality-Brille, enthaltend eine Vorrichtung zur Erzeugung und Darstellung von Bildern nach einem der Ansprüche 1 bis 12.
